(19)

Europäisches
Patentamt
European
Patent Office
Office européen
des brevets

(11)  **EP 4 289 500 A1**

(12)  # EUROPEAN PATENT APPLICATION
published in accordance with Art. 153(4) EPC

(43) Date of publication:
**13.12.2023  Bulletin 2023/50**

(21) Application number: **22784608.6**

(22) Date of filing: **30.03.2022**

(51) International Patent Classification (IPC):
**B01D 61/00** *(2006.01)*     **C08G 65/26** *(2006.01)*
**C02F 1/44** *(2023.01)*

(52) Cooperative Patent Classification (CPC):
**B01D 61/00; C02F 1/44; C08G 65/26**

(86) International application number:
**PCT/JP2022/015978**

(87) International publication number:
**WO 2022/215624 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2021  JP 2021065218**

(71) Applicant: **Nippon Shokubai Co., Ltd.
Osaka-shi, Osaka 541-0043 (JP)**

(72) Inventors:
- **KUMAGAI Sumito
  Suita-shi, Osaka 564-0034 (JP)**
- **TOKUSHIMA,Hiroki
  Suita-shi, Osaka 564-0034 (JP)**
- **MATONO, Akitoshi
  Suita-shi, Osaka 564-0034 (JP)**

(74) Representative: **Cohausz & Florack
Patent- & Rechtsanwälte
Partnerschaftsgesellschaft mbB
Bleichstraße 14
40211 Düsseldorf (DE)**

(54)  **DRAW SOLUTE AND WATER TREATMENT EQUIPMENT**

(57)  A draw solute for a forward osmosis membrane process, containing a compound including a structural site derived from an amine compound and a polyoxyalkylene structural site wherein two or more oxyalkylene groups are randomly bonded.

**EP 4 289 500 A1**

## Description

### Technical Field

The present disclosure relates to a draw solute and a water treatment equipment.

### Background Art

Conventionally, various techniques for desalinating salts contained in seawater, brine water, and the like have been known, and a separation technique by a forward osmosis process using an osmotic pressure inducer (draw solute) has been known. When water treatment is performed by using the forward osmosis process, it is necessary to transfer a solvent (water) through a semipermeable membrane to a side of a solution having higher osmotic pressure (draw solution) than a solution to be subjected to the treatment, and then to recover the solvent from the draw solution.

Patent Literature 1 proposes, as a draw solute, a block copolymer having a glycerin structure as a basic structure, and including an ethylene oxide group as a hydrophilic part and a group consisting of propylene oxide and/or butylene oxide as a hydrophobic part.

### Citation List

### Patent Literature

Patent Literature 1: Japanese Patent No. 6172385

### Summary of Invention

### Technical Problem

As described above, it has been known that the block copolymer having an ethylene oxide group and propylene oxide and/or butylene oxide is used as a draw solute for a forward osmosis membrane process in desalination in the forward osmosis membrane process, but in the related art, there is room for improvement in terms of ease of transferring of the solvent (water) to the draw solution from the solution to be subjected to the treatment.

Therefore, an object of the present disclosure is to provide a draw solute for a forward osmosis membrane process with which a draw solution exhibiting high osmotic pressure and having excellent phase separation properties can be obtained.

### Solution to Problem

The present inventors have conducted various studies in order to achieve the above object, and have conceived the present disclosure. That is, the present disclosure is a draw solute for a forward osmosis membrane process, containing a compound including a structural site derived from an amine compound and a polyoxyalkylene structural site in which two or more oxyalkylene groups are randomly bonded.

### Advantageous Effects of Invention

The draw solute of the present disclosure exhibits high osmotic pressure and favorable phase separation properties. Therefore, the draw solute of the present disclosure can be preferably used, for example, as a draw solute in a forward osmosis (FO) system.

### Description of Embodiments

Hereinafter, the present disclosure will be described in detail. Note that, a combination of two or more of the individual preferred embodiments of the present disclosure described below is also a preferred embodiment of the present disclosure.

[Draw Solute of Present Disclosure]

A draw solute for a forward osmosis membrane process (also referred to as the draw solute in some cases) of the present disclosure contains a compound including a structural site derived from an amine compound and a polyoxyalkylene structural site in which two or more oxyalkylene groups are randomly bonded (hereinafter, also referred to as the "compound of the present disclosure").

In the present disclosure, the term "structural site derived from an amine compound" refers to a structural site in which at least one hydrogen atom is removed from at least one amino group contained in the amine compound.

In the present disclosure, the oxyalkylene group is not particularly limited, and a group represented by general formula $-CH_2CH(-R^0)-O-$ or $-CH(-R^0)CH_2-O-$ is preferable. The above $R^0$ is preferably selected from a hydrogen atom, an alkyl group optionally having a substituent, and an aryl group optionally having a substituent.

The oxyalkylene group is preferably a group having 2 or more and 20 or less carbon atoms, more preferably a group having 2 or more and 15 or less carbon atoms, and even more preferably a group having 2 or more and 10 or less carbon atoms. Therefore, the above $R^0$ is preferably a group having 0 or more and 18 or less carbon atoms, more preferably a group having 0 or more and 13 or less carbon atoms, and even more preferably a group having 0 or more and 8 or less carbon atoms. Examples of the oxyalkylene group include an oxyethylene group ($-CH_2CH_2-O-$), an oxy-propylene group ($-CH_2CH(-CH_3)-O-$ or $-CH(-CH_3)CH_2-O-$), and an oxybutylene group (for example, $-CH_2CH(-C_2H_5)-O-$, $-CH(-C_2H_5)CH_2-O-$, or $-CH(CH_3)-CH(CH_3)-O-$).

The amine compound (also referred to as amine in some cases) is not particularly limited as long as it is a compound having one or two or more amino groups. However, in the present disclosure, ammonia is included in the compound having an amino group. For example, in the case of triethanolamine, i.e., $N(CH_2CH_2OH)_3$, N is a structural site derived from an amine compound, and three of $CH_2CH_2O-$ are treated as an oxyalkylene group.

Examples of the amine compound include aliphatic amines, aromatic amines, and heterocyclic amines Examples of the aliphatic amines include aliphatic primary amines such as methylamine, ethylamine, propylamine, isopropylamine, butylamine, 2-pentylamine, 3-pentylamine, neopentylamine, hexylamine, octylamine, 2-ethylhexylamine, nonylamine, decylamine, pentadecylamine, cetylamine, laurylamine, stearylamine, cyclopropylamine, cyclobutylamine, cyclopentylamine, cyclohexylamine, and 1-adamantanamine; and aliphatic secondary amines such as dimethylamine, ethylmethylamine, diethylamine, methylpropylamine, methylisopropylamine, ethylpropylamine, ethylisopropylamine, butylmethylamine, methyl t-butylamine, dipropylamine, diisopropylamine, ethyl t-butylamine, N-ethyl-1,2-dimethylpropylamine, dibutylamine, diisobutylamine, di(t-butyl)amine, ethylhexylamine, dipentylamine, dihexylamine, di(2-ethylhexyl)amine, dioctylamine, didecylamine, dilaurylamine, dicetylamine, distearylamine, methylstearylamine, ethylstearylamine, butylstearylamine, methylcyclohexylamine, ethylcyclohexylamine, N-t-butylcyclohexylamine, dicyclohexylamine, and di(2-methylcyclohexyl)amine.

Examples of the other aliphatic amines include aliphatic polyamines; and alkanolamines such as monoethanolamine, diethanolamine, and dipropanolamine. Among these, as the amine compound, aliphatic polyamines are preferably used.

Examples of the aliphatic polyamines include aliphatic compounds having two or more amino groups. Examples of the aliphatic polyamines include N,N'-dimethyl-1,3-propanediamine, 1,3-pentanediamine, ethylenediamine, diethylenetriamine, and triethylenetetramine (N,N'-di(2-aminoethyl)ethylenediamine). Among these, as the amine compound, diethylenetriamine is preferably used.

The number of amino groups in the aliphatic polyamine is preferably 2 to 20, more preferably 2 to 10, and even more preferably 2 to 5.

The molecular weight of the aliphatic polyamine is preferably 50 to 5000, more preferably 75 to 3000, and even more preferably 100 to 2000.

The amine value of the aliphatic polyamine is not particularly limited, and can be, for example, 5 to 40 (mmol/g. solid).

Examples of the aromatic amines include aromatic primary amines such as benzylamine, phenylpropylamine, phenylbutylamine, 1,1-dimethyl-2-phenylethylamine, 3,4-dimethylbenzylamine, aniline, methylaniline, ethylaniline, propylaniline, isopropylaniline, butylaniline, laurylaniline, stearylaniline, dimethylaniline, diethylaniline, methylbenzylamine, 4,4'-methylenedianiline, naphthylamine, trimethylaniline, and 4-methylphenethylamine; and aromatic secondary amines such as methylbenzylamine, ethylbenzylamine, t-butylbenzylamine, diphenylamine, and dibenzylamine.

Examples of the other aromatic amines include aromatic polyamines such as N-benzyl-1,3-propanediamine, 2,4,6-trimethyl-1,3-phenylenediamine, and 4-aminobenzylamine.

Examples of the heterocyclic amines include aziridine, azetidine, pyrrolidine, 2-methylpyrrolidine, piperidine, 2-methylpiperidine, 3-methylpiperidine, 4-methylpiperidine, 2,4-dimethylpiperidine, 3,5-dimethylpiperidine, 2,6-dimethylpiperidine, 2,2,6,6-tetramethylpiperidine, piperazine, N-methylpiperazine, N-ethylpiperazine, N-isobutylpiperazine, N-cyclohexylpiperazine, N-cyclopentylpiperazine, N-phenylpiperazine, 1-(2-pyridyl)piperazine, 1-(4-pyridyl)piperazine, 1-(2-pyrimidyl)piperazine, morpholine, pyrrole, 2-methylpyrrole, 2,4-dimethylpyrrole, 3,4-dimethylpyrrole, pyrazole, 3,5-dimethylpyrazole, imidazole, 3-methylindole, and 2-phenylindole.

The number of amino groups contained in the amine compound is preferably 1 to 100, more preferably 1 to 70, and even more preferably 1 to 50.

The amine compound may be one type alone or a mixture of two or more types.

In the compound of the present disclosure, the polyoxyalkylene structural site contains two or more oxyalkylene groups.

In the present disclosure, the expression "two or more oxyalkylene groups are randomly bonded" may be understood in the usual sense, but for example, at the polyoxyalkylene structural site, a first oxyalkylene group $OA^1$ and a second oxyalkylene group $OA^2$ may be bonded in an irregular order.

The molar ratio of the first oxyalkylene group $OA^1$ and the second oxyalkylene group $OA^2$ contained at the polyoxyalkylene structural site in the compound of the present disclosure is preferably 1 : 1 or more and 1 : 30 or less, more preferably 1 : 1 or more and 1 : 20 or less, and even more preferably 1 : 1 or more and 1 : 10 or less. When the molar ratio of the first oxyalkylene group $OA^1$ and the second oxyalkylene group $OA^2$ contained at the polyoxyalkylene structural site is in the above range, the osmotic pressure and the phase separation properties exhibited by the draw solute of the present disclosure tend to be favorable.

The first oxyalkylene group $OA^1$ and the second oxyalkylene group $OA^2$ contained at the polyoxyalkylene structural site in the compound of the present disclosure are preferably an oxyethylene group ($-CH_2CH_2-O-$), an oxypropylene group ($-CH_2CH(-CH_3)-O-$ or $-CH(-CH_3)CH_2-O-$), or an oxybutylene group (for example, $-CH_2CH(-C_2H_5)-O-$, $-CH(-C_2H_5)CH_2-O-$, or $-CH(CH_3)-CH(CH_3)-O-$).

In the compound of the present disclosure, the number of moles of the oxyalkylene group per 1 mol of the structural site derived from an amine compound is preferably 5 mol or more. The number of moles is more preferably 10 mol or more and even more preferably 20 mol or more. On the other hand, the number of moles of the oxyalkylene group per 1 mol of the structural site derived from an amine compound is preferably 100 mol or less, more preferably 80 mol or less, and even more preferably 70 mol or less. When the number of moles of the oxyalkylene group per 1 mol of the structural site derived from an amine compound is in the above range, the osmotic pressure and the phase separation properties exhibited by the draw solute of the present disclosure tend to be favorable.

The compound of the present disclosure may include a structural site other than the structural site derived from an amine compound and the polyoxyalkylene structural site. In the compound of the present disclosure, the structural site derived from an amine compound and the polyoxyalkylene structural site may be directly bonded, but a bonding group may be present between the structural sites. In the compound of the present disclosure, the polyoxyalkylene structural site is usually bonded to the structural site derived from an amine compound directly or with the bonding group interposed therebetween in at least one terminal, but may be bonded to other groups in another terminal. Examples of the other groups include a hydrogen atom and an organic group having 1 to 30 carbon atoms.

As for the molecular weight of the compound of the present disclosure, from the viewpoint of suppressing leakage of the compound through the membrane, the number average molecular weight is preferably 500 to 10000, more preferably 1250 to 7000, and even more preferably 1500 to 5000. Furthermore, the weight average molecular weight is preferably 500 to 10000, more preferably 1250 to 7000, and even more preferably 1500 to 5000. Note that, the number average molecular weight and the weight average molecular weight can be measured by gel permeation chromatography (GPC). When the number average molecular weight and the weight average molecular weight of the compound of the present disclosure are in the above ranges, the osmotic pressure and the phase separation properties exhibited by the draw solute of the present disclosure tend to be favorable.

The compound of the present disclosure preferably has a cloud point (lower critical solution temperature). The cloud point means a temperature at which phase separation occurs by changing the temperature of a transparent or translucent liquid, resulting in an opaque liquid.

By heating a liquid containing the compound of the present disclosure, the phase separation can be caused into the liquid mainly containing the compound of the present disclosure and a liquid mainly containing a solvent (water).

The cloud point of the compound of the present disclosure can be appropriately adjusted by changing the configuration of the compound of the present disclosure, for example, the structure of amine, the type of the oxyalkylene group, the number of addition moles, and the like.

The cloud point of the compound of the present disclosure is preferably 80°C or lower. The cloud point of the compound of the present disclosure is more preferably 20°C to 80°C and even more preferably 30°C to 80°C.

The compound of the present disclosure contained in the draw solute of the present disclosure may be one type alone or two or more types.

In the compound of the present disclosure, the polyoxyalkylene structural site is not particularly limited, but may be formed by alkylene oxide.

In the present disclosure, the alkylene oxide is not particularly limited, and examples thereof include ethylene oxide (EO), propylene oxide (PO), 1,2-butylene oxide (1,2-BO), 2,3-butylene oxide (2,3-BO), styrene oxide, epichlorohydrin, tetrahydrofuran, oxetane, dioxirane, trioxane, butyl glycidyl ether, phenyl glycidyl ether, and allyl glycidyl ether.

The compound of the present disclosure can be obtained by subjecting alkylene oxide to random addition polymerization to an amine compound. The number of moles of alkylene oxide per 1 mol of the amine compound is preferably 5 mol or more, more preferably 10 mol or more, and even more preferably 20 mol or more. On the other hand, the number of moles of alkylene oxide per 1 mol of the amine compound is preferably 100 mol or less, more preferably 80 mol or less, and even more preferably 70 mol or less.

The reaction conditions for random addition polymerization (alkoxylation) of alkylene oxide are not particularly limited, and for example, the amine compound and alkylene oxide can be reacted as they are or after dilution with a solvent as necessary at preferably 0°C to 200°C and more preferably 120°C to 180°C. In this case, an alkali catalyst such as potassium hydroxide (KOH) or sodium hydroxide (NaOH) may be used as a catalyst. The reaction can be carried out, for example, by adding a catalyst to the amine compound and further feeding alkylene oxide into the reaction system. In the case of random addition polymerization of two or more alkylene oxides, these alkylene oxides may be mixed and then fed, or may be fed separately. Furthermore, in the case of separately feeding each of two or more alkylene oxides, these alkylene oxides may be fed simultaneously or sequentially. Note that, the reaction rate can be further increased by aging for 1 to 2 hours until sufficient reaction occurs after feeding alkylene oxide.

After the random addition polymerization reaction of alkylene oxide, an acid such as acetic acid, lactic acid, or phosphoric acid is added for neutralization. Further, a step of removing impurities is preferably performed. The removal method is not particularly limited, and examples thereof include centrifugation, filtration, evaporation, and distillation. It is preferable to remove light impurities such as 2,3-butadione contained in the compound under reduced pressure at 120°C to 200°C, more preferably 140°C to 180°C.

[Draw Solution of Present Disclosure]

A draw solution of the present disclosure contains the above draw solute. The content of the draw solute is preferably 20 to 100% by mass, more preferably 50 to 100% by mass, and even more preferably 75 to 100% by mass with respect to the total amount of the draw solution.

The above draw solution may contain a solvent. The solvent may be appropriately selected depending on the conditions of the forward osmosis membrane process using a draw solution, and the like, and one or two or more solvents selected from water, methanol, ethanol, and the like can be used. As the solvent, it is more preferable to contain the same solvent as that in a solution to be subjected to the treatment (also referred to as a feed solution in some cases). The content of the solvent can be, for example, 80 to 0% by mass with respect to the total amount of the draw solution.

The above draw solution may contain draw solutes (other draw solutes) other than the above draw solute, but the content thereof is preferably 20% by mass or less with respect to the total amount of the draw solute. The draw solution is preferably composed of the above draw solute, optional solvents, and optional other draw solutes, and more preferably composed of the above draw solute and optional solvents.

The above draw solution preferably has a cloud point (lower critical solution temperature). The cloud point means a temperature at which phase separation occurs by changing the temperature of a transparent or translucent liquid, resulting in an opaque liquid. The draw solution having a cloud point can cause phase separation between the draw solute and the solvent by heating.

The cloud point of the above draw solution can be appropriately adjusted by changing the configuration of the compound of the present disclosure, for example, the type of the amine compound, the type of the polyoxyalkylene structural site, the number of moles of the polyoxyalkylene group, and the like, and a draw solution having an appropriate cloud point can be selected according to the intended use.

For example, when the forward osmosis membrane process is applied to water treatment utilizing low-temperature exhaust heat from factories, it is preferable that the draw solution does not undergo phase separation at a temperature around room temperature at which the forward osmosis membrane treatment is performed, and the draw solution undergoes phase separation at a temperature close to the low-temperature exhaust heat of factories. Suitable cloud points of the draw solution used in such applications vary depending on the concentration of the draw solute in the draw solution, but the cloud point when the draw solute is a 50% by mass aqueous solution is, for example, preferably 20°C to 80°C, and more preferably 30°C to 80°C.

[Water Treatment Method of Present Disclosure]

In the forward osmosis membrane process, a feed solution and a draw solution are brought into contact via a semipermeable membrane, and the solvent is transferred from the feed solution side having lower osmotic pressure to the draw solution side having higher osmotic pressure. Along with the transfer of the solvent, the concentration of the draw solution gradually decreases. Therefore, the draw solute and the solvent contained in the draw solution need to be separated in order to continuously perform the forward osmosis membrane process. According to the draw solution having a cloud point, the draw solute and the solvent can be phase-separated by heating.

In the forward osmosis membrane process using such a draw solution having a cloud point, for example, the forward osmosis membrane process can be continuously performed by repeating the following treatment.

- Each of the feed solution and the draw solution is arranged on one side of the semipermeable membrane and on the other side thereof so as to contact with the semipermeable membrane, thereby moving the solvent from the side of the feed solution to the side of the draw solution through the semipermeable membrane.

- The draw solution whose concentration is decreased is taken out and heated to cause phase separation between the draw solute and the solvent.
- The draw solute obtained by phase separation is circulated to the above other side again.
- The solvent obtained by phase separation is further purified by using, for example, a nanofiltration membrane (NF membrane) to obtain a desired treated object (purified water, and the like).

The temperature at which the forward osmosis membrane process is performed is not particularly limited, but is usually around room temperature, and can be, for example, 5°C to 40°C.

As the semipermeable membrane used in the forward osmosis membrane process, a conventionally known membrane can be used, but in order to maintain the strength as a membrane, it is preferable to use a combination of a dense active layer, that establishes the selective permeability of the membrane, and a porous support layer. Since the support layer is more likely to adsorb fouling than the active layer, it is generally preferable to provide the active layer of the semipermeable membrane on the feed solution side, from the viewpoint of reducing membrane fouling.

The above draw solution can be applied to various applications utilizing the forward osmosis membrane process. Among them, water treatment equipment and electricity generation equipment are applications in which utilization of a forward osmosis membrane process is expected, and the draw solution can be suitably applied to these applications.

**Examples**

Hereinafter, the present disclosure will be described in more detail with reference to examples. However, the scope of the present disclosure is not limited to these examples, and changes and implementations within a scope not departing from the purport of the present invention are all included in the technical scope of the present disclosure. Unless otherwise specified, "%" means "% by mass".

[Synthesis of Compounds]

As shown below, the compounds of Example 1 and Comparative Examples 1 to 3 were synthesized. The core molecule before addition polymerization, the sequence structure, the addition molar ratio of alkylene oxide to the core molecule, and the design molecular weight for each compound are collectively shown in Table 1. Note that, the design molecular weight is calculated as the sum of the molecular weight of the core molecule and a value obtained by multiplying the molecular weight of alkylene oxide by the molar ratio of alkylene oxide added to 1 mol of the core molecule.

<Production Example 1>

A 1 L autoclave was charged with 150.0 g of diethylenetriamine and 8.75 g of a 48% KOH aqueous solution at room temperature, and then the gaseous phase was replaced with nitrogen gas, and the pressure was reduced to a gauge pressure of -0.1 MPa while bubbling nitrogen gas at 20 mL/min. Thereafter, the temperature was raised to 125°C, and stirring was performed for 5 hours. After the pressure was raised to 0.20 MPa, bubbling was stopped, and 320.2 g of ethylene oxide was injected over 4 hours, followed by aging for 3 hours.

210.0 g of the intermediate thus obtained was charged into an autoclave at room temperature, and then the gaseous phase was replaced with nitrogen gas to adjust the gauge pressure to 0.20 MPa. While stirring, 283.5 g of ethylene oxide and 232.0 g of butylene oxide were injected over 2 hours, and aging was performed for 3 hours.

150.0 g of the intermediate thus obtained was charged into an autoclave at room temperature, and then the gaseous phase was replaced with nitrogen gas to adjust the gauge pressure to 0.20 MPa. While stirring, 175.8 g of ethylene oxide and 95.9 g of butylene oxide were injected over 4 hours, and aging was performed for 3 hours. Thereafter, after the temperature was lowered to 60°C, the pressure was released, and 1.23 g of 50% lactic acid was added. The pressure was reduced to a gauge pressure of -0.1 MPa while bubbling nitrogen gas at 20 mL/min, and the mixture was stirred at 125°C for 3 hours. As a result, a compound (1) of Example 1 was obtained.

<Production Example 2>

A 1 L autoclave was charged with 150.0 g of diethylenetriamine and 8.75 g of a 48% KOH aqueous solution at room temperature, and then the gaseous phase was replaced with nitrogen gas, and the pressure was reduced to a gauge pressure of -0.1 MPa while bubbling nitrogen gas at 20 mL/min. Thereafter, the temperature was raised to 125°C, and stirring was performed for 5 hours. After the pressure was raised to 0.20 MPa, bubbling was stopped, and 320.2 g of ethylene oxide was injected over 4 hours, followed by aging for 3 hours. 150.0 g of the intermediate thus obtained was charged into an autoclave at room temperature, and then the gaseous phase was replaced with nitrogen gas to adjust the gauge pressure to 0.20 MPa. While stirring, 506.2 g of ethylene oxide was injected over 4 hours, and aging was performed for 1 hour.

150.0 g of the intermediate thus obtained was charged into an autoclave at room temperature, and then the gaseous phase was replaced with nitrogen gas to adjust the gauge pressure to 0.20 MPa. While stirring, 69.4 g of ethylene oxide was injected over 2 hours, and aging was performed for 1 hour.

150.0 g of the intermediate thus obtained was charged into an autoclave at room temperature, and then the gaseous phase was replaced with nitrogen gas to adjust the gauge pressure to 0.20 MPa. While stirring, 77.7 g of butylene oxide was injected over 1 hour, and aging was performed for 3 hours. Thereafter, after the temperature was lowered to 60°C, the pressure was released, and 0.67 g of 50% lactic acid was added. The pressure was reduced to a gauge pressure of -0.1 MPa while bubbling nitrogen gas at 20 mL/min, and the mixture was stirred at 125°C for 3 hours. As a result, a compound (2) of Comparative Example 1 was obtained.


<Production Example 3>

A 1 L autoclave was charged with 150.0 g of diethylenetriamine and 8.75 g of a 48% KOH aqueous solution at room temperature, and then the gaseous phase was replaced with nitrogen gas, and the pressure was reduced to a gauge pressure of -0.1 MPa while bubbling nitrogen gas at 20 mL/min. Thereafter, the temperature was raised to 125°C, and stirring was performed for 5 hours. After the pressure was raised to 0.20 MPa, bubbling was stopped, and 320.2 g of ethylene oxide was injected over 4 hours, followed by aging for 3 hours.

150.0 g of the intermediate thus obtained was charged into an autoclave at room temperature, and then the gaseous phase was replaced with nitrogen gas to adjust the gauge pressure to 0.20 MPa. While stirring, 202.5 g of ethylene oxide was injected over 2 hours, and aging was performed for 1 hour.

150.0 g of the intermediate thus obtained was charged into an autoclave at room temperature, and then the gaseous phase was replaced with nitrogen gas to adjust the gauge pressure to 0.20 MPa. While stirring, 70.5 g of butylene oxide was injected over 1 hour, and aging was performed for 3 hours. Thereafter, after the temperature was lowered to 60°C, the pressure was released, and 1.07 g of 50% lactic acid was added. The pressure was reduced to a gauge pressure of -0.1 MPa while bubbling nitrogen gas at 20 mL/min, and the mixture was stirred at 125°C for 3 hours. As a result, a compound (3) of Comparative Example 2 was obtained.


<Production Example 4>

An autoclave was charged with 150.0 g of glycerin and 8.40 g of 50% KOH aqueous solution at room temperature, and then the gaseous phase was replaced with nitrogen gas, and the pressure was reduced to a gauge pressure of -0.1 MPa while bubbling nitrogen gas at 20 mL/min. Thereafter, the temperature was raised to 125°C, and stirring was performed for 5 hours. After the pressure was raised to 0.20 MPa, the bubbling was stopped, and 440.0 g of ethylene oxide and 160.0 g of butylene oxide were injected over 2 hours, followed by aging for 3 hours.

150.0 g of the intermediate thus obtained was charged into an autoclave at room temperature, and then the gaseous phase was replaced with nitrogen gas to adjust the gauge pressure to 0.20 MPa. While stirring, 497.6 g of ethylene oxide and 181.0 g of butylene oxide were injected over 2 hours, and aging was performed for 3 hours. After the temperature was lowered to 60°C, the pressure was released, and 1.16 g of 85% phosphoric acid was added. The pressure was reduced to a gauge pressure of -0.1 MPa while bubbling nitrogen gas at 20 mL/min, and the mixture was stirred at 125°C for 3 hours. As a result, a compound (4) of Comparative Example 3 was obtained.

[Table 1]

| | Compound | Structure | Core molecule | Alkylene oxide (molar ratio) | | | Molecular weight |
| --- | --- | --- | --- | --- | --- | --- | --- |
| | | | | EO | PO | BO | |
| Production Example 1 | (1) | Random | DETA | 45 | 0 | 15 | 3000 |
| Production Example 2 | (2) | Block | DETA | 45 | 0 | 15 | 3000 |
| Production Example 3 | (3) | Block | DETA | 15 | 0 | 5 | 1000 |
| Production Example 4 | (4) | Random | Gly | 41 | 0 | 9 | 2000 |
| DETA: diethylenetriamine Gly: glycerin | | | | | | | |

[Evaluation of Compounds]

<Example 1 and Comparative Examples 1 to 3>

The compounds of Example 1 and Comparative Examples 1 to 3 were evaluated as follows. The results are shown in Table 2.

(Cloud Point Evaluation)

An aqueous solution containing 50% by mass of each compound was prepared and sealed in a screw vial. This was allowed to stand in an oven at 97°C for 1 hour to separate layers, then cooled while measuring the internal temperature, and the temperature at which a visually uniform layer was formed was taken as the cloud point.

(Phase Separation Evaluation)

An aqueous solution containing 50% by mass of each compound was prepared and sealed in a screw vial. This was allowed to stand in an oven at 70°C or 85°C overnight to be sufficiently equilibrated, and then about 1 g of the upper phase and about 1 g of the lower phase were sampled at three points each and placed on an aluminum cup. The aluminum cup was left to stand in an oven at 97°C for 2 hours for drying, and the compound concentrations of the upper phase and the lower phase were calculated from the weight difference before and after drying.

(Effective Osmotic Pressure Evaluation)

An aqueous solution containing 50% by mass of each compound was prepared and sealed in a screw vial. This was allowed to stand in an oven at 70°C or 85°C overnight to be sufficiently equilibrated, about 5 mL of the aqueous solution of the lower phase was then sampled in a special sample cup, and the water activity at 25°C was measured using a water activity measurement instrument (AquaLab Series 4 TDL). Measurement was performed 3 to 5 times, and the average value thereof was taken as a water activity measurement value. The osmotic pressure (bar) was calculated from the obtained water activity measurement value using a calculation formula and unit conversion.

$$\text{Osmotic pressure (bar)} = ((1 - [\text{Water activity measurement value}])/18.015) \times 10 \times 8.31 \times (273.15 + [\text{Measurement temperature}]))$$

[Table 2]

| | Compound | Cloud point °C | Phase separation properties (polymer concentration) (wt%) | | | | Effective osmotic pressure (bar) | |
|---|---|---|---|---|---|---|---|---|
| | | | 70°C | | 85°C | | 70°C | 85°C |
| | | | Upper phase | Lower phase | Upper phase | Lower phase | | |
| Example 1 | (1) | 57 | 5 | 70 | 2 | 77 | 106 | 152 |
| Comparative Example 1 | (2) | 53 | 5 | 64 | 2 | 73 | 90 | 140 |
| Comparative Example 2 | (3) | 76 | × | × | 14 | 56 | × | 70 |
| Comparative Example 3 | (4) | 75 | × | × | 9 | 57 | × | 80 |
| ×: not phase-separated | | | | | | | | |

From the results in Table 2, it was found that the draw solute of the present disclosure has a function of developing a draw solution with high osmotic pressure and favorable phase separation properties.

**Claims**

1. A draw solute for a forward osmosis membrane process, comprising a compound including a structural site derived from an amine compound and a polyoxyalkylene structural site wherein two or more oxyalkylene groups are randomly bonded.

2. The draw solute for a forward osmosis membrane process according to claim 1, wherein a cloud point of an aqueous solution of 50% by mass of the compound is 80°C or lower.

3. The draw solute for a forward osmosis membrane process according to claim 1 or 2, wherein the number of moles of the oxyalkylene group per 1 mol of the structural site derived from an amine compound is 5 mol or more.

4. The draw solute for a forward osmosis membrane process according to any one of claims 1 to 3, wherein the oxyalkylene groups are at least two or more oxyalkylene groups selected from the group consisting of an oxyethylene group, an oxypropylene group, and an oxybutylene group.

5. A method for producing a draw solute for a forward osmosis membrane process, comprising a step of subjecting two or more alkylene oxides to random addition polymerization to an amine compound.

6. A draw solution comprising the draw solute for a forward osmosis membrane process according to any one of claims 1 to 4.

7. A water treatment method using the draw solution according to claim 6.

## INTERNATIONAL SEARCH REPORT

| | International application No. |
|---|---|
| | **PCT/JP2022/015978** |

**A.    CLASSIFICATION OF SUBJECT MATTER**

*B01D 61/00*(2006.01)i; *C08G 65/26*(2006.01)i; *C02F 1/44*(2006.01)i
FI:    B01D61/00 500; C02F1/44 G; C08G65/26

According to International Patent Classification (IPC) or to both national classification and IPC

**B.    FIELDS SEARCHED**

Minimum documentation searched (classification system followed by classification symbols)

B01D61/00; C08G65/26; C02F1/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/045525 A1 (NIPPON SHOKUBAI CO., LTD.) 05 March 2020 (2020-03-05) claims, paragraphs [0017]-[0018], [0020], [0022], [0027]-[0029] | 1-7 |
| A | JP 2019-504763 A (TREVI SYSTEMS INC.) 21 February 2019 (2019-02-21) entire text, all drawings | 1-7 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/015978**

| Patent document cited in search report | | | Publication date (day/month/year) | Patent family member(s) | | | Publication date (day/month/year) |
|---|---|---|---|---|---|---|---|
| WO | 2020/045525 | A1 | 05 March 2020 | US | 2021/0253450 | A1 | |
| | | | | claims, paragraphs [0030]-[0031], [0033], [0035], [0041]-[0043] | | | |
| | | | | EP | 3845296 | A1 | |
| JP | 2019-504763 | A | 21 February 2019 | US | 2019/0054421 | A1 | |
| | | | | WO | 2017/136048 | A1 | |
| | | | | EP | 3411133 | A1 | |
| | | | | KR | 10-2018-0104152 | A | |
| | | | | CN | 108778469 | A | |
| | | | | KR | 10-2020-0087271 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6172385 B